# EUROPEAN PATENT SPECIFICATION

(11) **EP 2 979 279 B1**
(45) Date of publication and mention of the grant of the patent: **30.05.2018**
(21) Application number: 14713933.1
(22) Date of filing: 14.03.2014
(51) Int. Cl.: H01F 1/055

(54) **PERMANENT MAGNET, AND MOTOR AND GENERATOR USING THE SAME**
DAUERMAGNET UND MOTOR UND STROMGENERATOR DAMIT
AIMANT PERMANENT, ET MOTEUR ET GENERATEUR D'ÉNERGIE L'UTILISANT

(30) Priority: 26.03.2013 JP 2013064914
(43) Date of publication of application: 03.02.2016
(73) Proprietor: Kabushiki Kaisha Toshiba, Minato-ku Tokyo 105-8001 (JP)
(72) Inventor: ENDO, Masaki, Tokyo 105-8001 (JP); SAKURADA, Shinya, Tokyo 105-8001 (JP); HORIUCHI, Yosuke, Tokyo 105-8001 (JP); KOBAYASHI, Tsuyoshi, Tokyo 105-8001 (JP); OKAMOTO, Keiko, Tokyo 105-8001 (JP); HAGIWARA, Masaya, Tokyo 105-8001 (JP)
(74) Representative: Hoffmann Eitle
(86) International application number: PCT/JP2014/001458
(87) International publication number: WO 2014/156031

(56) References cited:
- EP-A1- 0 156 483
- US-A1- 2012 146 444
- US-A1- 2012 242 180
- C. MAURY ET AL: "Genesis of the cell microstructure in the Sm(Co, Fe, Cu, Zr) permanent magnets with 2:17 type", PHYSICA STATUS SOLIDI (A), vol. 140, no. 1, 16 November 1993 (1993-11-16), pages 57-72, XP055108686, ISSN: 0031-8965, DOI: 10.1002/pssa.2211400104
- DECAMPOS ET AL: "The (SmZr)CoPhase in Sm(CoFeCuZr)Magnets", IEEE TRANSACTIONS ON MAGNETICS, IEEE SERVICE CENTER, NEW YORK, NY, US, vol. 42, no. 11, 1 November 2006 (2006-11-01), pages 3770-3772, XP011142572, ISSN: 0018-9464, DOI: 10.1109/TMAG.2006.884058

## Description

### Field

Embodiments described herein relate generally to a permanent magnet, and a motor and a generator using the same.

### Background

As high-performance permanent magnets, rare-earth magnets such as Sm-Co magnets and Nd-Fe-B magnets are known. When a permanent magnet is used in a motor for a hybrid electric vehicle (HEV) or electric vehicle (EV), it is demanded for the permanent magnet to have heat resistance. In motors for HEV or EV, permanent magnets whose heat resistance is increased by replacing a part of neodymium (Nd) of Nd-Fe-B magnet with dysprosium (Dy) are used. Dy is one of rare elements, and thus permanent magnets not using Dy are demanded.

The Sm-Co magnets have a high Curie temperature and thus are known to exhibit excellent heat resistance as a magnet not using Dy, and are expected to realize favorable operating characteristics at high temperatures. The Sm-Co magnets are low in magnetization compared to the Nd-Fe-B magnets, and are not able to achieve sufficient values of maximum magnetization energy product ((BH)ₘₐₓ). In order to increase magnetization of the Sm-Co magnets, it is effective to replace a part of cobalt (Co) with iron (Fe), and increase Fe concentration. However, coercive force of Sm-(Co, Fe) based magnets tends to decrease in a composition region having high Fe concentration. Accordingly, there is demanded a technique to enable exertion of large coercive force with good reproducibility in the Sm-(Co, Fe) based magnets having a composition with high Fe concentration.

US 2012/242180 A1 describes a permanent magnet including a composition of RₚFe_{q}Zr_{rMs}CuₜCo_{100-p-q-r-s-t} (R: rare-earth element, M: at least one element selected from Ti and Hf, 10 ≤ p ≤ 15, 24 ≤ q ≤ 40.5, 1.5 ≤ r ≤ 4.5, 0 ≤ s ≤ 3, 1.5 ≤ r+s ≤ 4.5, and 0.8 ≤ t ≤ 13.5 (atomic %)). The permanent magnet has a texture including a main phase which is formed of a Th₂Zn₁₇ type crystal phase, and a grain boundary phase which has a crystal phase having a Zr concentration of from 4 atomic % or more to 35 atomic % or less.

Phys. Stat. Sol. (a) 140, 57 (1993) discloses that alloys with a composition around SM_{11.5}Co_{58.4}Fe_{22.5}CU_{5.3}Zr_{2.4} (at%) present hard magnet properties when their microstructure consists of a network of cells based on Sm₂(Co, Fe)₁₇, limited by boundaries based on Sm(Co, Cu)₅ and cut by platelets based on (Sm, Zr)Co₃.

EP 0 156 483 A1 describes a process for producing an Sm₂Co₁₇ alloy suitable for use as a permanent magnet, the alloy also containing iron, copper and zirconium or a similar group IVB or VB transition metal, and optionally praseodymium in partial replacement of the samarium. The process comprises providing the alloy in a preliminary form, sintering the alloy at an elevated temperature to achieve a high density and high remanence, selecting a solution heat treatment temperature which is marginally below the solid+liquid/solid phase transformation temperature of said alloy, cooling the sintered alloy body from the sintering temperature to the solution treatment temperature in a controlled manner to put the alloy constituents into a substantially uniform 2-17 Sm-Co solid solution, holding at the solid solution treatment temperature, quenching the alloy to room temperature, reheating the alloy to a first aging temperature to transform the 2-17 Sm-Co solid solution into a structure comprising a network of the 1-5 Sm-Co phase within a 2-17 Sm-Co matrix, cooling the alloy to a second aging temperature in a controlled manner to cause regions of 2-17 Sm-Co phase to nucleate coherently within the 1-5 Sm-Co phase network and create lattice strain which results in high coercivity and good loop squareness, and cooling the alloy to room temperature.

### Brief Description of Drawings

[fig.1]FIG. 1 is a TEM image illustrating in enlargement a metallic structure of a permanent magnet of an example.
[fig.2]FIG. 2 is a TEM image illustrating in enlargement a metallic structure of a permanent magnet of a comparative example.
[fig.3]FIG. 3 is a view illustrating a permanent magnet motor of an embodiment.
[fig.4]FIG. 4 is a view illustrating a variable magnetic flux motor of the embodiment.
[fig.5]FIG. 5 is a diagram illustrating a generator of the embodiment.
[fig.6]FIG. 6 is a diagram illustrating the relation between an average thickness of a platelet phase of an Sm-(Co, Fe) permanent magnet and coercive force.
[fig.7]FIG. 7 is a diagram illustrating the relation between the average thickness of the platelet phase of the Sm-(Co, Fe) permanent magnet and residual magnetization.
[fig.8]FIG. 8 is a diagram illustrating the relation between an average thickness of the platelet phase of the Sm-(Co, Fe) permanent magnet and a maximum magnetic energy product.

### Detailed Description

According to one embodiment, there is provided a permanent magnet including a composition represented by the following composition formula:

RₚFe_{q}MᵣCuₛCo_{100-p-q-r-s} ... (1)

wherein R is at least one element selected from the group consisting of rare earth elements, M is at least one element selected from the group consisting of Zr, Ti, and Hf, p is 8.0 atomic% or more and 13.5 atomic% or less, q is 25 atomic% or more and 40 atomic% or less, r is 0.88 atomic% or more and 7.2 atomic% or less, and s is 3.5 atomic% or more and 13.5 atomic% or less, and
a metallic structure including a cell phase, a cell wall phase, and a platelet phase. In the permanent magnet of the embodiment, the cell phase has a Th₂Zn₁₇ crystal phase, the cell wall phase exists in a form surrounding the cell phase, and the platelet phase exists along a c plane of the Th₂Zn₁₇ crystal phase. An average thickness of the platelet phase is in a range of from 3 nm to 15 nm , and
wherein a coercive force of the permanent magnet is 650 kA/m or more, and a residual magnetization of the permanent magnet is 1.15 T or more.

Hereinafter, the permanent magnet of the embodiment will be described in detail. In the composition formula (1), at least one element selected from rare earth elements including scandium (Sc) and yttrium (Y) is used as the element R. The element R brings about large magnetic anisotropy in the permanent magnet, and gives high coercive force. As the element R, at least one selected from samarium (Sm), cerium (Ce), neodymium (Nd), and praseodymium (Pr) is preferably used, and use of Sm is particularly desirable. When 50 atomic% or more of the element R is Sm, it is possible to increase the performance, particularly the coercive force of the permanent magnet with good reproducibility. Moreover, desirably, 70 atomic% or more of the element R is Sm.

The content p of the element R is in the range of 8.0 to 13.5 atomic%. When the content p of the element R is less than 8 atomic%, a large amount of alpha-Fe phase precipitates, and sufficient coercive force cannot be obtained. When the content of the element R exceeds 13.5 atomic%, saturation magnetization decreases significantly. The content p of the element R is preferably in the range of 10.2 to 13.0 atomic%, more preferably in the range of 10.5 to 12.5 atomic%.

Iron (Fe) is an element mainly responsible for magnetization of the permanent magnet. When a large amount of Fe is contained, saturation magnetization of the permanent magnet can be increased. However, when Fe is contained too much, the coercive force may decrease because of precipitation of alpha-Fe phase and because it becomes difficult to obtain a desired two-phase separation structure, which will be described later. The content q of Fe is in the range of 25 to 40 atomic%. The content q of Fe is preferably in the range of 28 to 38 atomic%, more preferably in the range of 30 to 36 atomic%.

As the element M, at least one element selected from titanium (Ti), zirconium (Zr), and hafnium (Hf) is used. Blending the element M enables the magnet to exert large coercive force in a composition range with high Fe concentration. The content r of the element M is in the range of 0.88 to 7.2 atomic%. When the content r of the element M is 0.88 atomic% or more, the permanent magnet having a composition with high Fe concentration is able to exert large coercive force. When the content r of element M is more than 7.2 atomic%, magnetization decreases significantly. The content r of the element M is preferably in the range of 1.3 to 4.3 atomic%, more preferably in the range of 1.5 to 2.6 atomic%.

The element M may be any one of Ti, Zr, and Hf, but is preferred to contain at least Zr. When 50 atomic% or more of the element M is Zr, it is possible to further improve the effect to increase the coercive force of the permanent magnet. Hf in the element M is particularly expensive, and thus when Hf is used the amount of Hf used is preferred to be small. Preferably, the content of Hf is less than 20 atomic% of the element M.

Copper (Cu) is an element for enabling the permanent magnet to exert high coercive force. The blending amount s of Cu is in the range of 3.5 to 13.5 atomic%. When the blending amount s of Cu is less than 3.5 atomic%, it is difficult to obtain high coercive force. When the blending amount s of Cu exceeds 13.5 atomic%, magnetization decreases significantly. The blending amount s of Cu is preferably in the range of 3.9 to 9 atomic%, more preferably in the range of 4.2 to 7.2 atomic%.

Cobalt (Co) is an element responsible for magnetization of the permanent magnet and necessary for enabling exertion of high coercive force. When a large amount of Co is contained, the Curie temperature becomes high, and thermal stability of the permanent magnet improves. When the content of Co is too small, these effects cannot be obtained sufficiently. However, when the content of Co is too large, the content ratio of Fe decreases relatively, and magnetization decreases. Therefore, the content of Co is set so that the content of Fe satisfies the above range in consideration of the contents of element R, element M and Cu.

A part of Co may be replaced with at least one element A selected from nickel (Ni), vanadium (V), chrome (Cr), manganese (Mn), aluminum (Al), gallium (Ga), niobium (Nb), tantalum (Ta) and tungsten (W). The replacement element A contributes to improvement of magnetic characteristics, for example coercive force. However, excessive replacement of Co with the element A may cause decrease in magnetization, and thus the amount of replacement with the element A is preferred to be 20 atomic% or less of Co.

The permanent magnet (Sm-(Co, Fe) based magnet) of the embodiment has a metallic structure formed by performing an aging treatment on a precursor, which is a TbCu₇ crystal phase (1-7 phase/high temperature phase) formed by a solution treatment. The metallic structure formed by the aging treatment has a phase separation structure having a cell phase constituted of a Th₂Zn₁₇ crystal phase (2-17 phase), a cell wall phase constituted mainly of a CaCu₅ crystal phase (1-5 phase), and a platelet phase. Preferably, the Sm-(Co, Fe) based magnet of the embodiment is a sintered magnet.

In the phase separation structure of the Sm-(Co, Fe) based magnet, the cell wall phase exists in a form surrounding the cell phase, and the platelet phase exists along a c plane of the 2-17 phase. The cell wall phase is preferred to have a Cu concentration 1.2 times or more that of the cell phase. A representative example of the cell wall phase is a 1-5 phase, but it is not restrictive. The platelet phase is a composition region which has a Th₂Ni₁₇ crystal phase and in which the concentration of the element M is 1.2 times or more that of the cell phase. The platelet phase has, for example, element M concentration of 2 atomic% or more.

In the permanent magnet of the embodiment, the platelet phase has an average thickness in the range of 3 to 15 nm. This enables the Sm-(Co, Fe) based magnet having a composition with high Fe concentration to exert large coercive force. In the composition region with high Fe concentration, when the average thickness of the platelet phase is 3 nm or more, phase separation into the cell phase and the cell wall phase proceeds favorably, and thus magnetization and coercive force of the Sm-(Co, Fe) based magnet improve. The average thickness of the platelet phase is 3 nm or more, preferably 5 nm or more. However, when the thickness of the platelet phase is too large, the coercive force decreases conversely, and thus the average thickness of the platelet phase is 15 nm or less. The average thickness of the platelet phase is preferably 10 nm or less.

The relation between the Fe concentration and the thickness of the platelet phase in the Sm-(Co, Fe) based magnet will be described in detail. It is known that in the Sm-(Co, Fe) based magnet, in general, a complicated phase separation structure of submicron order generated during the aging treatment is a high magnetic force source. Accordingly, it is inevitable to control a minute metallic structure. The phase separation caused by performing the aging treatment on the 1-7 phase as the precursor undergoes processes of two stages. For example, the first phase separation occurs when it is retained at a high temperature of about 800degrees centigrade, and the platelet phase is formed. The platelet phase contains the element M of high concentration. In a slow cooling step thereafter, phase separation of the second stage by spinodal decomposition occurs, and by mutual diffusion of Fe and Cu, the 2-17 phase (cell phase) with high Fe concentration and the 1-5 phase (cell wall phase) with high Cu concentration existing in a form surrounding the cell phase are formed.

The 2-17 phase (cell phase) has a crystal structure which exhibits high magnetization and has high Fe concentration, and thus is responsible for high saturation magnetization of the permanent magnet of the embodiment. The cell wall phase functions as a magnetic wall pinning site to prevent magnetic wall movement and enable exertion of coercive force. Some part of the physical mechanism of magnetic wall pinning still remains unclear, but it is experimentally confirmed that even distribution of Cu of high concentration in the cell wall phase is effective for exertion of high coercive force. Moreover, by controlling the structure so that the cell phase has a sufficient volume fraction with respect to the cell wall phase, the saturation magnetization increases. From these points, for high magnetization of the Sm-(Co, Fe) based magnet, it is important to obtain a high concentration difference and a long concentration fluctuation wavelength by activating mutual diffusion of Fe and Cu occurring during the spinodal decomposition.

In the mutual diffusion of Fe and Cu, it is conceived that the platelet phase works as a diffusion path. Accordingly, making the platelet phase as a thick film has been performed conventionally by increasing the concentration of the element M such as Zr, Ti, and Hf. However, it has become clear that although this is effective for the Sm-(Co, Fe) based magnet having a conventional Fe composition, it is not always so for the Sm-(Co, Fe) based magnet having a composition with high Fe concentration. Specifically, the solubility limit of the element M decreases due to increase in Fe concentration, and thus a hetero-phase (alloy phase) containing an abundant amount of the element M is generated easily. As a result, in a composition region where Fe concentration is high, the amount of the element M which can be added decreases as compared to conventional compositions. Therefore, it is conceivable that the volume ratio of the platelet phase in the Sm-(Co, Fe) based magnet decreases, and the mutual diffusion of Fe and Cu becomes insufficient.

In the Sm-(Co, Fe) based magnet (sintered magnet) constituted of a sintered compact with high Fe concentration, for increasing the volume ratio of the platelet phase, that is, making it as a thick film, it is important to take in the element M into crystals more effectively. For this purpose, it is effective to control the atmosphere, cooling rate, and so on in a sintering step of a magnetic powder (alloy powder) with high Fe concentration. In general, sintering of the Sm-(Co, Fe) based magnet is performed in an inert gas atmosphere of Ar gas or the like or a vacuum atmosphere. When it is sintered in the inert gas atmosphere, evaporation of highly volatile Sm and the like can be suppressed, and there is an advantage that a composition change is small. However, the hetero-phase can easily occur in the inert gas atmosphere. Moreover, the inert gas remains in pores and makes it difficult to eliminate the pores, and densification of the sintered compact is difficult. On the other hand, it has been found that sintering in the vacuum atmosphere can suppress generation of the hetero-phase. However, the amount of evaporation of Sm and the like becomes large in the vacuum atmosphere, and it is difficult to control the composition of the sintered compact to be an appropriate alloy composition as a permanent magnet.

Regarding such points, it is effective to perform a final sintering step (main sintering step) in the inert gas atmosphere of Ar gas or the like after a pre-treatment step (preliminary sintering step) is performed in the vacuum atmosphere. By applying a sintering step having the preliminary sintering step in the vacuum atmosphere and the main sintering step in the inert gas atmosphere, a high-density sintered compact with density of, for example, 8.2 g/cm³ or more can be obtained while suppressing generation of the hetero-phase in the composition region with high Fe concentration as well as evaporation of Sm and the like. Moreover, by rapidly cooling after the preliminary sintering in the vacuum atmosphere, and performing the main sintering step and solution treatment step in the inert gas atmosphere, and thereafter performing an aging treatment step, the platelet phase in the sintered compact before final spinodal decomposition can be made as a thick film.

By rapidly cooling after the preliminary sintering in the vacuum atmosphere, a large amount of pores are introduced into the preliminary sintered compact. By performing the main sintering of such a preliminary sintered compact in the inert gas atmosphere to eliminate the pores, a concentration distribution of the element R such as Sm occurs. By performing the aging treatment on the densified sintered compact, phase separation occurs easily since free energy in crystals is unstable, and moreover the platelet phase becomes energetically stable and hence becomes easy to be generated. In the composition region with high Fe concentration, a platelet phase having an average thickness of 3 to 15 nm can be obtained. While cooling in the aging treatment step, mutual diffusion of Fe and Cu occurs with the platelet phase in a thick film state being a diffusion path, and thus it is possible to allow phase separation into the cell phase and the cell wall phase to proceed effectively.

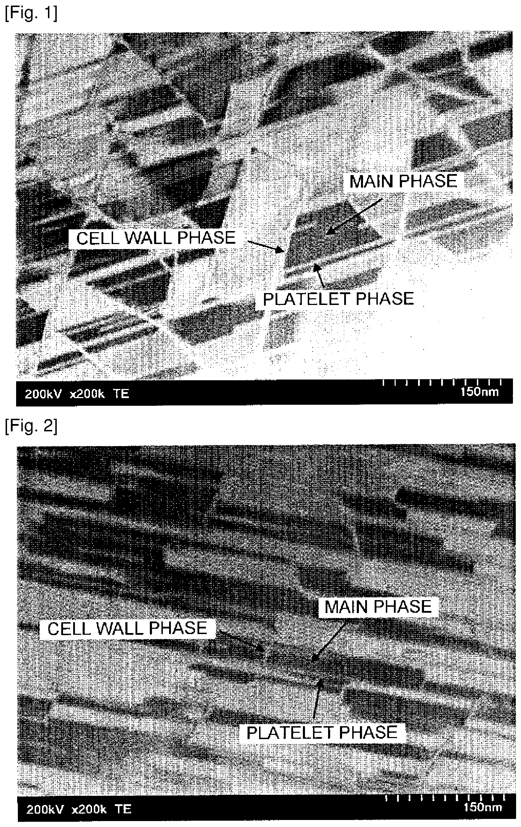

The platelet phase finally exists along the c plane of the 2-17 phase. FIG. 1 is a transmission electron microscope (TEM) image illustrating in enlargement a metallic structure of a sintered magnet of example 1, which will be described later. FIG. 2 is a TEM image illustrating in enlargement a metallic structure of a sintered magnet of comparative example 1. In FIG. 1 and FIG. 2, the cell phase, the cell wall phase, and the platelet phase are indicated by allows. The platelet phase of FIG. 1 is apparent compared to that of FIG. 2 and has a large thickness.

As described above, the permanent magnet of the embodiment has the platelet phase whose average thickness is in the range of 3 to 15 nm, and it becomes possible to allow the phase separation into the cell phase and the cell wall phase to proceed effectively based on such a platelet phase. While improving magnetization by the cell phase with high Fe concentration, the phase separation into the cell phase and the cell wall phase is facilitated, to thereby realize an Sm-(Co, Fe) permanent magnet (sintered magnet) to which high coercive force is added. According to the embodiment, it is possible to provide an Sm-(Co, Fe) based permanent magnet which achieves both high coercive force and high magnetization. The coercive force of the permanent magnet of the embodiment is 650 kA/m or more, preferably 800 kA/m or more. The residual magnetization of the permanent magnet is 1.15 T or more, preferably 1.17 T or more.

It is possible to observe the metallic structure having the phase separation structure in the permanent magnet of the embodiment by using, for example, TEM. Preferably, the TEM observation is performed under magnification of 200 k times. With respect to the permanent magnet constituted of the sintered compact oriented in a magnetic field, TEM observation of a cross-section including a c-axis of the 2-17 phase as the cell phase is performed. The platelet phase is a region having element M concentration of 1.2 times or more of that of the cell phase. For composition analysis of elements, semiquantitative measurement such as TEM-energy dispersive x-ray spectroscopy (TEM-EDX) can be applied.

When the TEM-EDX is used, straight lines are drawn in parallel to the c-axis of the 2-17 phase, that is, perpendicular to the platelet phase on the TEM image, and 20 or more intersecting points between the straight lines and the platelet phase are chosen. Plural straight lines are used. Each of all platelet phases which can be identified with the TEM image is made to have at least one intersecting point. At each intersecting point, an elemental analysis is performed for every 20 points, an average value of measurement values excluding the maximum value and the minimum value is obtained for each element, and this average value is taken as the concentration of each element. Then, widths of regions having element M concentration of 1.2 times or more of that of the cell phase are obtained, and the average value of them is taken as the average thickness of the platelet phase. The thickness of the platelet phase is defined as a thickness in the c-axis direction of the 2-17 phase.

Measurement by TEM or TEM-EDX is performed with respect to the inside of the sintered compact. The measurement of the inside of the sintered compact is as follows. In a center portion of a longest side on an easy magnetization axis plane, the composition is measured in a surface portion and an inside portion of a cross-section taken perpendicular to the side (perpendicular to a tangential line of the center portion in the case of a curved line). As positions of measurement, there are provided a reference line 1 drawn perpendicular to a side and inward to an end portion from a position of 1/2 of each side on the above cross section as a start point, and a reference line 2 drawn inward to an end portion from a center of each corner as a start point at a position of 1/2 of the internal angle of the corner, and the position of 1% of the length of the reference line from the start point of each of these reference lines 1, 2 is defined as a surface portion and the position of 40% thereof is defined as an inside portion. When the corner has a curvature by chamfering or the like, the intersecting point of extended adjacent sides is taken as an end portion (center of the corner) of the side. In this case, the measurement position is a position not from the intersecting point but from a portion in contact with the reference line.

By setting the measurement positions as above, when the cross section is a quadrangle for example, there are four reference lines 1 and four reference lines 2, eight reference lines in total, and there are eight measurement positions each as the surface portion and the inside portion. In this embodiment, it is preferred that all the eight positions each as the surface portion and the inside portion fall within the above composition ranges, but it will suffice if at least four or more positions each as the surface portion and the inside portion fall within the above composition ranges. In this case, the relation between the surface portion and the inside portion on one reference line is not defined. An observation surface defined thus in the sintered compact is smoothed by polishing and then observed. For example, observation positions of the TEM-EDX are set to arbitrary 20 points in the cell phase and the cell wall phase, an average value of measurement values excluding the maximum value and the minimum value is obtained from measurement values at these points, and this average value is taken as the concentration of each element. Measurement with TEM is also in accordance with this.

The permanent magnet of this embodiment is produced as follows for example. First, an alloy powder containing a predetermined amount of elements is prepared. The alloy powder is prepared by pulverizing an alloy ingot, which is obtained by casting a molten metal by an arc melting method or a high-frequency melting method. The alloy powder may be prepared by making alloy thin strips in a flake form by a strip cast method and thereafter pulverizing the alloy thin strips. In the strip cast method, preferably, an alloy molten metal is poured by tilting onto a cooling roll rotating at a peripheral velocity of 0.1 to 20 m/second, thereby sequentially obtaining a thin strip having a thickness of 1 mm or less. When the peripheral velocity of the cooling roll is less than 0.1 m/second, dispersion of the composition occurs easily in the thin strip, and when the peripheral velocity exceeds 20 m/second, crystal grains are micronized to be equal to or less than a single magnetic domain size, and good magnetic characteristics cannot be obtained.

Other methods for preparing the alloy powder include a mechanical alloying method, a mechanical grinding method, a gas-atomization method, a reduction diffusion method, and the like, and an alloy powder prepared by one of them may be used. To an alloy powder obtained thus or an alloy before being pulverized, a heat treatment may be performed as necessary for homogenization. Pulverization of the flake or ingot is performed by using a jet mill, a ball mill, or the like. To prevent oxidation of the alloy powder, preferably, the pulverization is performed in an inert gas atmosphere or an organic solvent.

Next, the alloy powder is filled in a metal mold placed in an electromagnet or the like, and press molding is performed while applying a magnetic field, to thereby produce a compression-molded body with oriented crystal axes. By sintering this compression-molded body under appropriate conditions, it is possible to obtain a sintered compact with high density. Preferably, the sintering step of the compression-molded body has the preliminary sintering step in the vacuum atmosphere and the main sintering step in the inert gas atmosphere as described above. The main sintering temperature is preferably 1215degrees centigrade or lower. When the Fe concentration is high, decrease in melting point is expected, and thus evaporation of Sm and the like occurs easily when the main sintering temperature is too high. The main sintering temperature is preferably 1205degrees centigrade or lower, more preferably 1195degrees centigrade or lower. However, to densify the sintered compact, the main sintering temperature is preferably 1170degrees centigrade or higher, more preferably 1180degrees centigrade or higher.

In the main sintering step in the inert gas atmosphere, a sintering time at the above main sintering temperature is preferably 0.5 to 15 hours. Thus, a fine sintered compact can be obtained. When the sintering time is less than 0.5 hour, unevenness of density of the sintered compact occurs. Further, when the sintering time exceeds 15 hours, Sm and the like in the alloy powder evaporate, and hence it is possible that good magnetic characteristics cannot be obtained. A more preferable sintering time is 1 to 10 hours, more preferably 1 to 4 hours. The main sintering step is performed in an inert gas atmosphere of Ar gas or the like.

To make the compression-molded body of the alloy powder with high Fe concentration be a sintered compact with high density, preferably, the preliminary sintering step is performed in the vacuum atmosphere before the main sintering step. Moreover, preferably, the vacuum atmosphere is maintained up to temperatures close to the main sintering temperature. Specifically, the preliminary sintering temperature in the vacuum atmosphere is preferably in a temperature range equal to or higher than a temperature which is lower by 50degrees centigrade than the main sintering temperature, and equal to or lower than the main sintering temperature. When the preliminary sintering temperature is lower than the temperature which is lower by 50degrees centigrade than the main sintering temperature, it is possible that the sintered compact cannot be densified sufficiently, and also that generation of the hetero-phase cannot be suppressed sufficiently and the magnetization decreases. More preferably, the preliminary sintering temperature is equal to or higher than the temperature which is lower by 40degrees centigrade than the main sintering temperature. When the preliminary sintering temperature in the vacuum atmosphere exceeds the main sintering temperature, Sm and the like evaporate and magnetic characteristics decrease. The preliminary sintering temperature is preferably set equal to or lower than the main sintering temperature.

The vacuum atmosphere (degree of vacuum) in the preliminary sintering step is preferably 9 x 10⁻² Pa or less. When the degree of vacuum in the preliminary sintering step is more than 9 x 10⁻² Pa, oxides of the element R such as Sm are formed excessively, and magnetic characteristics may decrease. The degree of vacuum in the preliminary sintering step is preferably 5 x 10⁻² Pa or less, more preferably 1 x 10⁻² Pa or less. The holding time at the preliminary sintering temperature is preferably 60 minutes or less. After the preliminary sintering is performed in the vacuum atmosphere, rapid cooling from a temperature equal to or higher than 800degrees centigrade to room temperature is performed. After such a rapid cooling step is performed, the main sintering step, the solution treatment step, and the aging treatment step can be performed, to thereby thicken the platelet phase. The cooling rate after the preliminary sintering is preferably 5degrees centigrade/second or more. More preferably, the cooling rate is 10degrees centigrade/second or more, furthermore preferably 15degrees centigrade/ second or more. Rapidly cooling the preliminary sintered compact from a high temperature to a low temperature causes the preliminary sintered compact to contain a large amount of pores. Thus, free energy in crystals becomes unstable, and the phase separation easily occurs during the aging treatment which is performed subsequently.

Next, the solution treatment and the aging treatment are performed on the obtained sintered compact to control the crystal structure. As the solution treatment, preferably, a heat treatment is performed for 0.5 to 40 hours at temperatures in the range of 1100degrees centigrade to 1200degrees centigrade, so as to obtain the 1-7 phase as the precursor of the phase separation structure. At temperatures lower than 1100degrees centigrade and temperatures higher than 1200degrees centigrade, the ratio of the 1-7 phase in the sample after the solution treatment becomes small, and good magnetic characteristics cannot be obtained. The solution treatment temperatures are more preferably in the range of 1110degrees centigrade to 1190degrees centigrade, furthermore preferably in the range of 1120degrees centigrade to 1180degrees centigrade. When the solution treatment time is less than 0.5 hour, the constituting phases easily become uneven. When the solution treatment is performed more than 40 hours, the evaporation amount of the element R such as Sm in the sintered compact increases. More preferably, the solution treatment time is in the range of 1 to 12 hours, furthermore preferably in the range of 1 to 8 hours. To prevent oxidation, preferably, the solution treatment is performed in the vacuum atmosphere or the inert gas atmosphere of Ar gas or the like.

Next, an aging treatment is performed on the sintered compact after the solution treatment. The aging treatment is for controlling crystal structures to increase the coercive force of the magnet. Preferably, the aging treatment is such that the sintered compact is retained for 0.5 to 80 hours at temperatures of 700degrees centigrade to 900degrees centigrade, slowly cooled thereafter at a cooling rate of 0.2degrees centigrade to 2degrees centigrade/minute to temperatures of 400degrees centigrade to 650degrees centigrade, and cooled subsequently to room temperature. The aging treatment may be performed by heat treatments of two stages. Specifically, the above heat treatment is the first stage, and a heat treatment of the second stage is performed subsequently after it is slowly cooled to temperatures of 400degrees centigrade to 650degrees centigrade. After being retained for a certain time at the heat treatment temperature in the second step, it is cooled to room temperature by furnace cooling. For preventing oxidation, preferably, the aging treatment is performed in the vacuum atmosphere or the inert gas atmosphere of Ar gas or the like.

When the aging treatment temperature is lower than 700degrees centigrade or higher than 900degrees centigrade, a homogeneous mixed structure of the cell phase and the cell wall phase cannot be obtained, and thus magnetic characteristics of the permanent magnet may decrease. The aging treatment temperature is more preferably 750degrees centigrade to 880degrees centigrade, furthermore preferably 780degrees centigrade to 850degrees centigrade. When the aging treatment time is less than 0.5 hour, it is possible that precipitation of the cell wall phase from the 1-7 phase does not complete sufficiently. On the other hand, when the retention time exceeds 80 hours, the cell wall phase becomes thick, and hence the volume fraction of the cell phase decreases. Further, the crystal grains become coarse, which may cause that good magnetic characteristics cannot be obtained. The aging treatment time is more preferably 4 to 60 hours, furthermore preferably 8 to 40 hours.

When the cooling rate after the aging treatment is less than 0.2degrees centigrade/ minute, the cell wall phase becomes thick, and hence the volume fraction of the cell phase decreases. Further, the crystal grains become coarse, which may result in that good magnetic characteristics are not obtained. When the cooling rate after the aging treatment exceeds 2degrees centigrade/minute, a homogeneous mixed structure of the cell phase and the cell wall phase cannot be obtained, and thus magnetic characteristics of the permanent magnet may decrease. More preferably, the cooling rate after the aging treatment is in the range of 0.4degrees centigrade to 1.5degrees centigrade/ minute, furthermore preferably in the range of 0.5degrees centigrade to 1.3degrees centigrade/minute. The aging treatment is not limited to the heat treatment of two stages and may be a heat treatment of more stages, or it is further effective to perform cooling of multiple stages. Further, as a pre-treatment before the aging treatment, it is also effective to perform a preliminary aging treatment at lower temperatures and for a shorter time (preliminary aging treatment) than in the aging treatment.

The permanent magnet of the embodiment can be used for various motors and generators. Moreover, the permanent magnet may be used as a stationary magnet or a variable magnet of a variable magnetic flux motor or a variable magnetic flux generator. Various motors and generators are formed using the permanent magnet of this embodiment. When the permanent magnet of this embodiment is applied to a variable magnetic flux motor, technologies disclosed in Japanese Patent Application Laid-open No. 2008-29148 or Japanese Patent Application Laid-open No. 2008-43172 can be applied to the structure and/or drive system of the variable magnetic flux motor.

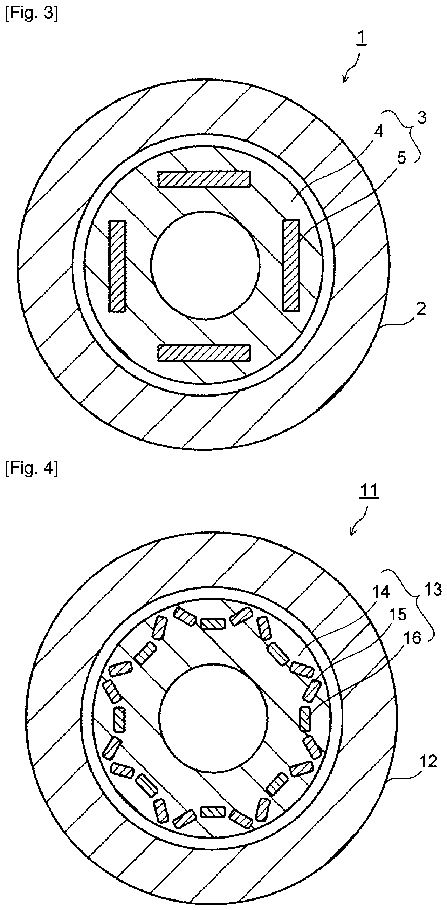

Next, a motor and a generator of the embodiment will be described with reference to the drawings. FIG. 3 illustrates a permanent magnet motor according to the embodiment. In the permanent magnet motor 1 illustrated in FIG. 3, a rotor 3 is disposed in a stator 2. In an iron core 4 of the rotor 3, permanent magnets 5 of the embodiment are disposed. Based on characteristics and the like of the permanent magnets of the embodiment, high efficiency, miniaturization, cost reduction, and the like of the permanent magnet motor 1 can be achieved.

FIG. 4 illustrates a variable magnetic flux motor of the embodiment. In the variable magnetic flux motor 11 illustrated in FIG. 4, a rotor 13 is disposed in a stator 12. In an iron core 14 of the rotor 13, the permanent magnet of the embodiment is disposed as stationary magnets 15 and variable magnets 16. The magnetic flux density (magnetic flux amount) of the variable magnets 16 is variable. The magnetization direction of the variable magnets 16 is orthogonal to a Q-axis direction and hence is not affected by a Q-axis current, and can be magnetized by a D-axis current. A magnetization winding (not illustrated) is provided on the rotor 13. It is structured such that by passing an electric current through the magnetization winding, the magnetic field thereof operates directly on the variable magnets 16.

The permanent magnet of the embodiment enables the stationary magnets 15 to obtain preferable coercive force. When the permanent magnet of the embodiment is applied to the variable magnets 16, the above-described various conditions (aging treatment condition and the like) of the manufacturing method may be changed to control, for example, the coercive force in the range of 100 to 500 kA/m. Note that in the variable magnetic flux motor 11 illustrated in FIG. 4, the permanent magnet of the embodiment can be used for both the stationary magnets 15 and the variable magnets 16, but the permanent magnet of the embodiment may be used for either one of the magnets. The variable magnetic flux motor 11 is capable of outputting large torque from a small device size, and thus is preferred for a motor of a hybrid vehicle, electric vehicle, or the like required to have high output and small size of the motor.

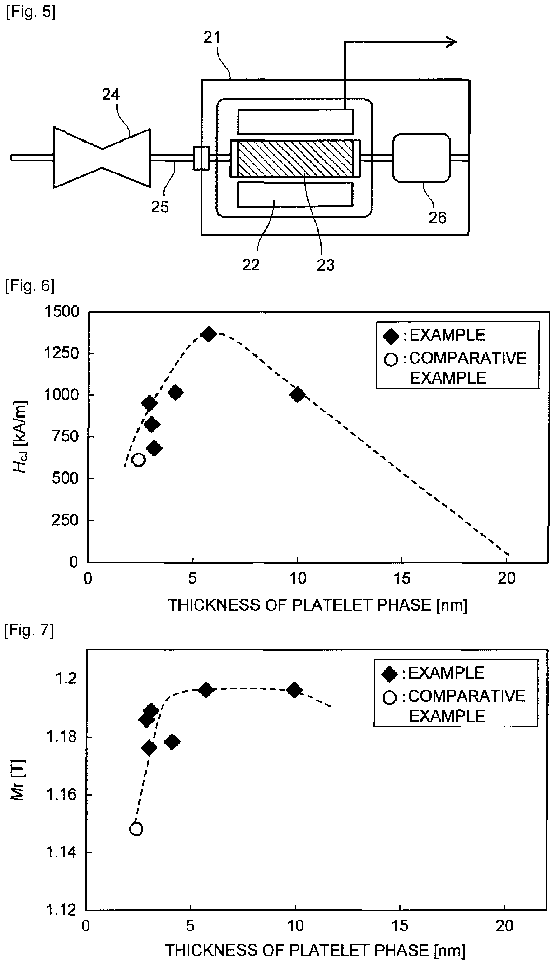

FIG. 5 illustrates a generator according to the embodiment. The generator 21 illustrated in FIG. 5 includes a stator 22 using the permanent magnet of the embodiment. A rotor 23 disposed inside the stator 22 is coupled to a turbine 24 provided on one end of the generator 21 via a shaft 25. The turbine 24 is rotated by, for example, fluid supplied from the outside. Instead of the turbine 24 rotated by fluid, the shaft 25 may be rotated by transmitting dynamic rotations of regenerative energy or the like of an automobile. Various publicly known structures may be employed for the stator 22 and the rotor 23.

The shaft 25 is in contact with a commutator (not illustrated) disposed on the opposite side of the turbine 24 with respect to the rotor 23, and electromotive force generated by rotations of the rotor 23 is increased in voltage to a system voltage and transmitted as output of the generator 21 via isolated phase buses and a main transformer (not illustrated). The generator 21 may be either of an ordinary generator and a variable magnetic flux generator. Static electricity from the turbine 24 or charges by an axial current accompanying power generation occur on the rotor 23. Accordingly, the generator 21 has a brush 26 for discharging the charges of the rotor 23.

Next, specific examples and evaluation results thereof will be described.

### (Examples 1 to 6)

After weighing and mixing respective materials by a predetermined ratio, they were arc melted in an Ar gas atmosphere to produce an alloy ingot. The alloy ingot was coarsely grinded, and thereafter dipped in ethanol and pulverized with a ball mill, to thereby prepare an alloy powder (magnetic material powder) as a raw material powder of the permanent magnet. The alloy powder was press molded in a magnetic field to produce a compression-molded body. Next, the compression-molded body of the alloy powder was placed in a chamber of a firing furnace, and the chamber was evacuated until it reaches a vacuum state such that the degree of vacuum in the chamber is 9.0 x 10⁻³ Pa or less. The temperature in the chamber was increased to 1160degrees centigrade in this state and was preliminary sintered by retaining at this temperature for five minutes, and thereafter Ar gas was introduced into the chamber to rapidly cool the sintered compact. The amount of introducing the Ar gas was increased and radiant heat was reduced, to thereby increase the rapid cooling rate of the sintered compact. The cooling rate was about 10degrees centigrade/second. Subsequently, the temperature in the chamber in an Ar atmosphere was increased to 1195degrees centigrade, and main sintering was performed by retaining for three hours at this temperature.

Following the main sintering step, a solution treatment was performed by retaining the sintered compact at 1140degrees centigrade to 1150degrees centigrade for four hours. Next, the sintered compact after the solution treatment was retained at 750degrees centigrade for two hours, slowly cooled thereafter to room temperature, and further retained at 850degrees centigrade for 10 hours. The sintered compact on which the aging treatment was performed under such conditions was slowly cooled to 400degrees centigrade and further furnace cooled to room temperature, thereby obtaining a target sintered magnet. Compositions of the sintered magnets are as illustrated in Table 1. A composition analysis for the magnets was performed by an ICP method. Analysis results are illustrated in Table 1. According to the above-described method, the average thickness of the platelet phase was measured. Moreover, magnetic characteristics of the sintered magnets were evaluated with a BH tracer, and coercive force Hcj, residual magnetization Mr, (BH)ₘₐₓ, and squareness were measured. Results of the measurement are illustrated in Table 2.

The composition analysis by the ICP method was performed following the procedure below. First, a predetermined amount of a sample pulverized in a mortar is weighed and put into a quartz beaker. A mixed acid (containing a nitric acid and a hydrochloric acid) is put therein, and the beaker is heated to about 140degrees centigrade on a hot plate, so as to completely melt the sample. After letting cool, the sample is moved to a PFA volumetric flask to have a constant volume, which is a sample solution. In such a sample solution, contained components are quantitated by a calibration curve method using an ICP emission spectrophotometer. As the ICP emission spectrophotometer, SPS4000 (product name) made by SII Nano Technology was used.

### (Comparative example 1)

A sintered magnet having the composition illustrated in Table 1 was produced similarly to example 1 except that the cooling rate after the preliminary sintering in the vacuum atmosphere of the compression-molded body was slowed to about 3degrees centigrade/second. The average thickness, coercive force H_{cj}, residual magnetization Mr, (BH)ₘₐₓ, and squareness of the platelet phase of the obtained sintered magnet were measured similarly to example 1. Results of the measurement are illustrated together in Table 2.

**<Table 1>**

| | Magnet compositions (atomic%) |
|---|---|
| Example 1 | Sm_{12.2}Fe_{28.9}Zr_{1.8}Cu_{5.1}Co_{52.0} |
| Example 2 | Sm_{12.2}Fe_{28.9}Zr_{1.8}Cu_{5.1}Co_{52.0} |
| Example 3 | Sm_{12.2}Fe_{28.9}Zr_{1.8}Cu_{5.1}Co_{52.0} |
| Example 4 * | Sm_{12.2}Fe_{28.6}Zr_{1.9}Cu_{5.2}CO_{52.1} |
| Example 5 | Sm_{12.2}Fe_{28.6}Zr_{1.9}Cu_{5.2}Co_{52.1} |
| Example 6 | Sm_{12.2}Fe_{29.9}Zr_{1.8}Cu_{4.7}Co_{51.4} |
| Comparative Example 1 | Sm_{12.1}Fe_{29.9}Zr_{1.9}Cu_{5.2}Co_{50.9} |

| | |
|---|---|
| * Reference Example, not part of the claimed invention | |

**<Table 2>**

| | Average thickness of platelet phase [nm] | Coercive force [kA/m] | Residual magnetization Mr [T] | (BH)max [kJ/m³] | Squareness [%] |
|---|---|---|---|---|---|
| Example 1 | 9.9 | 1000 | 1.196 | 260 | 91.2 |
| Example 2 | 5.7 | 1365 | 1.196 | 260 | 90.9 |
| Example 3 | 3.0 | 821 | 1.176 | 240 | 87.2 |
| Example 4 * | 2.9 | 949 | 1.186 | 251 | 89.2 |
| Example 5 | 4.1 | 1014 | 1.178 | 237 | 85.4 |
| Example 6 | 3.1 | 685 | 1.189 | 195 | 69.0 |
| Comparative Example 1 | 2.4 | 606 | 1.148 | 174 | 66.2 |

| | | | | | |
|---|---|---|---|---|---|
| * Reference Example, not part of the claimed invention | | | | | |

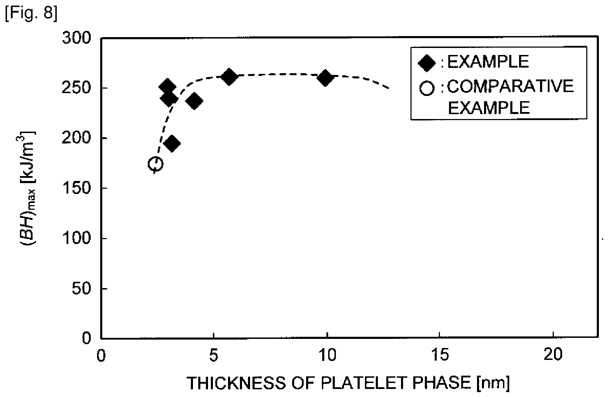

As is clear from Table 2, it can be seen that the sintered magnets of examples 1 to 6 all have a large thickness of the platelet phase and have high magnetization and high coercive force based on the thickness. FIG. 6 illustrates the relation between the thickness (average thickness) of the platelet phase and the coercive force. FIG. 7 illustrates the relation between the thickness (average thickness) of the platelet phase and the residual magnetization. FIG. 8 illustrates the relation between the thickness (average thickness) of the platelet phase and (BH)ₘₐₓ. As is clear from these diagrams, in the region where the thickness of the platelet phase is 5 nm or less, the coercive force, the residual magnetization, and (BH)ₘₐₓ increase monotonously with respect to the thickness of the platelet phase. When the thickness of the platelet phase is less than 2.5 nm, it can be seen that both the coercive force and the residual magnetization are - - - small, and sufficient magnetic characteristics cannot be obtained.

In the region where the thickness of the platelet phase is 5 to 10 nm, the residual magnetization and (BH)ₘₐₓ take substantially constant values, but the coercive force depends largely on the thickness of the platelet phase. That is, when the thickness of the platelet phase exceeds 20 nm, the coercive force that enables use as the permanent magnet cannot be obtained. From these points, it can be seen that the average thickness of the platelet phase should be in the range of 2.5 to 20 nm. However, accompanying increase in volume fraction of the platelet phase, there is a concern of decrease in saturation magnetization, and thus the average thickness of the platelet phase is in the range of 3 to 15 nm according to the present invention. Furthermore, the average thickness of the platelet phase is desirably in the range of 5 to 10 nm which allows more stably obtaining Sm-(Co, Fe) based magnets with high magnetization and high coercive force.

## Claims

1. A permanent magnet, comprising:
a composition represented by the following composition formula:
RₚFe_{q}MᵣCuₛCo_{100-p-q-r-s}
wherein R is at least one element selected from the group consisting of rare earth elements,
M is at least one element selected from the group consisting of Zr, Ti, and Hf,
p is 8.0 atomic% or more and 13.5 atomic% or less,
q is 25 atomic% or more and 40 atomic% or less,
r is 0.88 atomic% or more and 7.2 atomic% or less, and
s is 3.5 atomic% or more and 13.5 atomic% or less; and
a metallic structure comprising a cell phase having a Th₂Zn₁₇ crystal phase, a cell wall phase existing in a form surrounding the cell phase, and a platelet phase existing along a c plane of the Th₂Zn₁₇ crystal phase,
wherein an average thickness of the platelet phase is in a range of from 3 nm to 15 nm, and
wherein a coercive force of the permanent magnet is 650 kA/m or more, and a residual magnetization of the permanent magnet is 1.15 T or more.

2. The permanent magnet of claim 1,
wherein a concentration of the element M in the platelet phase is 1.2 times or more of a concentration of the element M in the cell phase.

3. The permanent magnet of claim 1,
wherein a concentration of the element M in the platelet phase is 2 atomic% or more.

4. The permanent magnet of claim 1,
wherein 50 atomic% or more of the element R is Sm.

5. The permanent magnet of claim 1,
wherein 50 atomic% or more of the element M is Zr.

6. The permanent magnet of claim 1,
wherein 20 atomic% or less of the Co element is replaced with at least one element A selected from the group consisting of Ni, V, Cr, Mn, Al, Ga, Nb, Ta, and W.

7. A motor comprising the permanent magnet of claim 1.

8. A generator comprising the permanent magnet of claim 1.

## Patentansprüche

1. Permanentmagnet, umfassend:
eine Zusammensetzung, die durch die folgende Zusammensetzungsformel dargestellt wird:
RₚFe_{q}MᵣCuₛCo_{100-p-q-r-s}
worin R mindestens ein Element ist, das aus der Gruppe, bestehend aus Seltenerdelementen, ausgewählt ist,
M mindestens ein Element ist, das aus der Gruppe, bestehend aus Zr, Ti und Hf, ausgewählt ist,
p 8,0 Atom-% oder mehr und 13,5 Atom-% oder weniger ist,
q 25 Atom-% oder mehr und 40 Atom-% oder weniger ist,
r 0,88 Atom-% oder mehr und 7,2 Atom-% oder weniger ist, und
s 3,5 Atom-% oder mehr und 13,5 Atom-% oder weniger ist; und
eine metallische Struktur, umfassend eine Zellphase mit einer Th₂Zn₁₇-Kristallphase, eine Zellwandphase, die in einer Form vorliegt, die die Zellphase umgibt, und eine Plättchen-Phase, die entlang einer c-Ebene der Th₂Zn₁₇-Kristallphase vorliegt,
wobei eine durchschnittliche Dicke der Plättchen-Phase im Bereich von 3 nm bis 15 nm liegt, und
wobei eine Koerzitivkraft des Permanentmagneten 650 kA/m oder mehr ist und eine Restmagnetisierung des Permanentmagneten 1,15 T oder mehr beträgt.

2. Permanentmagnet gemäß Anspruch 1,
wobei eine Konzentration des Elements M in der Plättchen-Phase das 1,2-fache oder mehr einer Konzentration des Elements M in der Zellphase beträgt.

3. Permanentmagnet gemäß Anspruch 1,
wobei eine Konzentration des Elements M in der Plättchen-Phase 2 Atom-% oder mehr beträgt.

4. Permanentmagnet gemäß Anspruch 1,
wobei 50 Atom-% oder mehr des Elements R Sm sind.

5. Permanentmagnet gemäß Anspruch 1,
wobei 50 Atom-% oder mehr des Elements M Zr sind.

6. Permanentmagnet gemäß Anspruch 1,
wobei 20 Atom-% oder weniger des Co-Elements durch mindestens ein Element A ersetzt sind, das aus der Gruppe ausgewählt ist, die aus Ni, V, Cr, Mn, Al, Ga, Nb, Ta und W besteht.

7. Motor, umfassend den Permanentmagnet gemäß Anspruch 1.

8. Generator, umfassend den Permanentmagnet gemäß Anspruch 1.

## Revendications

1. Aimant permanent, comprenant :
une composition représentée par la formule de composition suivante :
RₚFe_{q}MᵣCuₛCo_{100-p-q-r-s}
dans laquelle R est au moins un élément sélectionné à partir du groupe constitué par des éléments des terres rares,
M est au moins un élément sélectionné à partir du groupe constitué par Zr, Ti, et Hf,
p est 8,0 % atomique ou plus et 13,5 % atomique ou moins,
q est 25 % atomique ou plus et 40 % atomique ou moins,
r est 0,88 % atomique ou plus et 7,2 % atomique ou moins, et
s est 3,5 % atomique ou plus et 13,5 % atomique ou moins ; et
une structure métallique comprenant une phase cellulaire ayant une phase cristalline Th₂Zn₁₇, une phase de paroi cellulaire existant sous une forme entourant la phase cellulaire, et une phase plaquettaire existant le long d'un plan c de la phase cristalline Th₂Zn₁₇,
dans lequel une épaisseur moyenne de la phase plaquettaire est dans une plage de 3 nm à 15 nm, et
dans lequel un champ coercitif de l'aimant permanent est de 650 kA/m ou plus, et une aimantation rémanente de l'aimant permanent est de 1,15 T ou plus.

2. Aimant permanent selon la revendication 1,
dans lequel une concentration de l'élément M dans la phase plaquettaire est de 1,2 fois ou plus d'une concentration de l'élément M dans la phase cellulaire.

3. Aimant permanent selon la revendication 1,
dans lequel une concentration de l'élément M dans la phase plaquettaire est de 2 % atomique ou plus.

4. Aimant permanent selon la revendication 1,
dans lequel 50 % atomique ou plus de l'élément R est Sm.

5. Aimant permanent selon la revendication 1,
dans lequel 50 % atomique ou plus de l'élément M est Zr.

6. Aimant permanent selon la revendication 1,
dans lequel 20% atomique ou moins de l'élément Co est remplacé par au moins un élément A sélectionné à partir du groupe constitué par Ni, V, Cr, Mn, Al, Ga, Nb, Ta, et W.

7. Moteur comprenant l'aimant permanent selon la revendication 1.

8. Générateur comprenant l'aimant permanent selon la revendication 1.
